Europäisches Patentamt

(19) European Patent Office       (11) Publication number:       **0 160 351**

Office européen des brevets                                **A1**

(12)                **EUROPEAN PATENT APPLICATION**

(21) Application number: **85300262.4**        (51) Int. Cl.⁴: **G 01 V 5/04**
                                                        **G 01 V 5/08, G 01 V 5/12**
(22) Date of filing: **15.01.85**

(30) Priority: **17.02.84 US 581475**

(43) Date of publication of application:
   **06.11.85 Bulletin 85/45**

(84) Designated Contracting States:
   **AT DE FR GB IT NL SE**

(71) Applicant: **HALLIBURTON COMPANY**
   **P.O. Drawer 1431**
   **Duncan Oklahoma 73536(US)**

(72) Inventor: **Ritter, Thomas Edward**
   **28705 Aqueduct Lane**
   **Boerne Texas 78006(US)**

(72) Inventor: **Ford, Maurice Lamar**
   **16711 Nicole Lane**
   **Houston Texas 77085(US)**

(72) Inventor: **Nunley, Allen**
   **6518 Neff**
   **Houston Texas 77074(US)**

(72) Inventor: **Riddle, George Archibald**
   **5238 Ariel**
   **Houston Texas 77096(US)**

(72) Inventor: **Schultz, Ward Edward**
   **418 Nottingham**
   **Houston Texas 77079(US)**

(74) Representative: **Wain, Christopher Paul et al,**
   **A.A. THORNTON & CO. Northumberland House 303-306**
   **High Holborn**
   **London WC1V 7LE(GB)**

(54) **Tool casing with gamma ray window.**

㊼ A casing construction for use, for example, in a nuclear logging tool, is made of two types of material. The tool case (10) is formed of a high density and high atomic number material (relatively opaque to gamma radiation) such as tungsten, and a more transparent window (28) is made of beryllium for example. The window is preferably sealed in the case and a coating is preferably provided on the window to protect it against wear and corrosion. A preferred coating is of thin electroless plated nickel, topped with a thin layer of titanium carbide.

FIG.1

- 1 -

## TOOL CASING WITH GAMMA RAY WINDOW

This invention relates to a tool casing for use, for example, in a nuclear logging tool.

In nuclear logging procedures, devices incorporating radioactive sources are utilized. One such device encloses a shielded radioactive source which emits gamma rays. The source is carried inside the tool housing. Typically, the tool is a sonde which is an armoured body suspended on a logging cable. The environment in which the tool is used is quite severe: wear and tear to the apparatus occur routinely and the housing must also withstand substantial temperatures and pressures as well as corrosive environments. There is a good deal of abrasion also.

The present invention relates to such a housing or tool body or case. Prior known such tool cases are normally constructed of steel of sufficient thickness to withstand typical downhole environment conditions including corrosion, abrasion, high temperatures and pressures. Steel is, however, a high atomic number material and, as is well known, low energy gamma rays are absorbed by steel or other materials of high atomic number. That is, the higher the atomic number, the greater is the rate of absorption of gamma rays per unit thickness. Quite clearly, there must be a degree of shielding between a source and a detector in a logging tool, so that the detector responds principally to radiation from the exterior.

We have now devised an improved tool case constructed to shield certain parts and also to include one or more transparent windows to enable relative ease of transmission of low energy photons.

According to the present invention, there is provided a tool casing for use as or in a downhole tool suspended in a borehole, the casing comprising:

(a) an elongate housing for enclosing a tool such as a logging tool, said housing forming an enclosure and having a chamber therein for equipment of said tool, and wherein said housing includes a body of thickness sufficient to withstand downhole pressures and temperatures;

(b) a window closing a window opening of said housing, said window being formed to seal said opening to prevent leakage through said window opening; and

(c) wherein said housing is formed of a material having a high atomic number and said window is formed of a material having a low atomic number.

The high atomic number material serves as shielding; in addition, it functions as a rugged and tough construction to enclose and house the more delicate components of a radioactive logging system. For instance, it can readily shield a radioactive source emitting gamma rays. In addition, the shielding of the case will enclose, house and protect sensitive radiation detectors. The body of the tool is thus made of the high density and high atomic number material and yet is provided with windows which are relatively transparent to gamma rays. The transparent windows are preferably made of a low density and low atomic number material such as beryllium or beryllium oxide. Beryllium oxide has the advantage over beryllium of being abrasion and corrosion resistant and sufficiently rugged while at the same time being relatively transparent. Beryllium oxide is less susceptible to corrosion than beryllium oxide is a ceramic and hence is more susceptible·

- 3 -

to shock and fracture.

By forming windows in a tool body such as one made of tungsten alloy materials, the windows being beryllium inserts, a suitable transparent arrangement with adequate shielding is constructed so that relatively low energy gamma rays can be received through these windows with relatively efficient transmission.  For long life and durability, it is helpful to additionally protect the windows by providing on them an external coating of electroless plated nickel as a corrosion barrier, with an outer coating of titanium carbide as the wear surface. Alternatively, aluminum oxide can be used in lieu of titanium carbide.  In relatively thin layers, coatings of this nature do not significantly reduce the transparency required for the system.

The tool casing of the invention will normally be capable of withstanding pressures of upwards of 25,000 psi (172 MPa) and temperatures of about 400°F (204°C), the body preferably being formed of a tungsten alloy with, preferably, beryllium window inserts.  This arrangement provides shielding and collimation of the gamma rays and also a structurally rugged body, readily capable of protecting the instrumentation located in the interior.  The body will normally have windows having a minimum window thickness of about $\frac{1}{4}$ inch (6mm), typically made of relatively pure beryllium, or alternatively beryllium oxide.  Durability of the window may be enhanced with a relatively thin coating material such as boride, electroless plated nickel, titanium carbide or aluminum oxide.

In order that the invention may be more fully understood, one embodiment thereof will now be described by way of example only with reference to the accompanying drawings, in which:

FIGURE 1 shows, in somewhat schematic vertical section, a logging tool suspended in a wellbore, the logging tool having a casing body constructed in accordance with the teachings of the present invention;

FIGURE 2 is a sectional view along the line 2-2 of Figure 1 showing details of construction of a window; and

FIGURE 3 is an enlarged view along the line 3-3 of Figure 2.

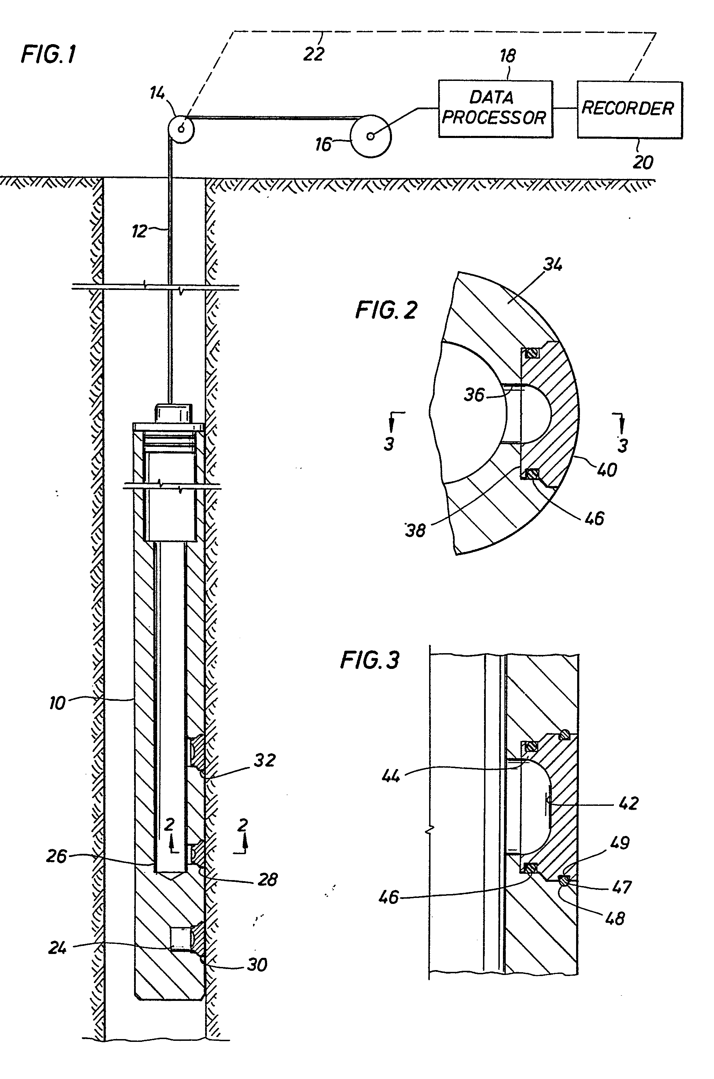

Attention is first directed to Figure 1 of the drawings where a logging tool is shown suspended in a borehole. The numeral 10 identifies a nuclear logging tool. It is supported on a logging cable 12. The cable 12 conducts suitable signals and power flow to and from the tool 10 in the well, the cable 12 being spooled over a sheave 14. The tool is typically lowered in a deep well, and can be exposed to pressures as high as about 25,000 psi (172 MPa) and temperatures in excess of $400^{\circ}F$ ($204^{\circ}C$). Moreover, the tool is supported on a cable as long as about 25,000 feet (7600 m); recently, even deeper wells have been drilled requiring longer cables. The logging cable 12 is spooled over the sheave 14, and is stored on a drum 16. The drum 16 is a storage drum for spooling out the cable. The electrical conductors in the cable 12 are connected with a data processor to derive and format the data of interest, the data processor being identified by the numeral 18. In turn, it is connected with a data recorder 20 which records the data as a function of depth in the well. That is, the depth of the tool 10 is determined and the data obtained by the tool are recorded as a function of depth. The depth of the tool is determined by first lowering the tool into the well, and measuring the length of cable which is paid out over the sheave 14. An electronic or mechanical depth measuring system 22 is connected between the sheave and the recorder to provide this information; the data are typically recorded as a variable function of depth.

The nature of the nuclear logging apparatus within the tool is not particularly important at this juncture. The present invention is concerned with the construction of the tool body or housing. Thus, the device to be described will be assumed to have a radioactive source which is housed in a chamber 24. The source emits radiation radially outwardly in a collimated pattern away from the tool. In addition, there is at least one detector window and preferably more; in this embodiment, there are three separate windows shown in the tool. A detector is positioned in the cavity at 26. It is immediately adjacent to a window 28 constructed as described herein. The radiation source is immediately adjacent to a window 30. The windows 28 and 30 are structurally similar, differing primarily in their application and location on the tool. Another window 32 is located remotely on the tool and a suitable detector (not shown) cooperates with this window; the three windows are substantially identical in construction. That is, they are windows formed in the body and are located and utilized to enable radiation to be transmitted through the windows.

It will be assumed that the three windows are at least similar or identical in construction, differing primarily in location, use and application. They may also differ in scale. Each window is immediately adjacent to a cavity or chamber for receiving a cooperative equipment, the chamber 24 receiving a radiation source, and the chamber 26 receiving a detector for such scattered radiation. The position of the windows is dependent on location of the source and detector(s). If two detectors are used, they are sometimes denoted as long and short spaced detectors.

Going now to Fig. 2 of the drawings, there it will be observed that the tool 10 is constructed of a relatively thick wall body. The body is identified by the numeral 34. This body is constructed of a tungsten alloy and is relatively thick, sufficiently thick that it is able to structurally withstand the severe environment in which the tool is used. Moreover, this rugged construction enables the tool to withstand pressures typically experienced in bottom hole circumstances, typical elevated temperatures and to endure abrasion and corrosion. It has been discovered that the body 34 is best made of a material having a relatively high atomic number. The relative opaqueness of the body is more or less related to the atomic number; that is, high atomic number materials are relatively more opaque. To this end, tungsten alloys are a preferred material. While there will be other constituent components in the alloy, the use of tungsten provides a relatively strong structure, able to withstand the severe use to which it is exposed. On top of that, the tungsten alloy is relatively opaque because tungsten has a high density and a high atomic number. The high atomic number of tungsten assures that it is a relatively opaque structure. Tungsten alloys are believed to be well known. One alloy is superdensalloy 180, made by the firm of Teledyne Powder Alloys and is primarily tungsten, at least 90% thereof; the remainder of the alloy is typically nickel, and iron along with other metal alloying elements. A tungsten carbide coating for wear protection is placed on the exposed surface of the body.

The dimensions of the body are to be determined by design criteria which are not material to this disclosure. Accordingly, Fig. 2 shows a generally cylindrical body formed of the alloy described above, of relatively thick wall construction, the body being formed primarily and principally of tungsten alloy to take advantage of the high atomic number provided by tungsten. It is relatively opaque; not only that, it defines a body which is substantial and rugged and able to withstand the working environment in which the device is used.

As shown in Fig. 2, the body is machined with a radial passage 36. The passage 36 terminates at a transverse face 38. The passage has a countersunk shoulder defining the outwardly directed face. This countersunk area defines a receptacle having a shoulder against which the window is positioned. That is, the hole 36 is access to the internal cavity where the detection equipment is located. The shoulder 38 serves as a registration surface to enable a window to be plugged into the body, so to speak. To this end, such a plug is shown in Fig. 2. It is formed either of beryllium or beryllium oxide to have a relatively low atomic number and hence a relatively transparent window. Moreover, the window is shaped so that it has an outer face 40 which conforms to the right cylinder construction observed on the exterior of the body. In contrasting Figs. 2 and 3, these two views being at right angles to one another, one drawing reveals a cut line across the diameter and hence the face 40 is a segment of a circle. Figure 3 shows that the face is a segment of a right cylinder external surface.

The window thus defines a specified thickness in the region at 42 as shown in Figure 3. This thickness is determined by the environment. That is, the window must resist a specified external pressure to avoid rupture of the window. To this end, this typically requires a thickness of about 0.25 inches (6.4mm) for tools to be exposed to maximum working pressures and temperatures. Further, the window preferably is a circular plug so that it matches the circular window opening in the body. That is, the window has a shape conforming to the opening in the body so that the window can be plugged in and fit snugly. The preferred shape is circular; an oval plug and opening can also be used. The window is constructed as a solid body having a lower skirt 44. The skirt is encircled with a surrounding groove to enable an 0-ring 46 to be positioned in the groove. The 0-ring serves as a seal against the borehole pressure outside of the housing. Leakage from the outside to the inside of the tool is thus prevented. As will be observed, the window is a solid member having the protruding lower skirt to enable it to be plugged into the opening, the window plugging and securing the opening against leakage. The plug which comprises the window of this disclosure is held in position by pins 47 which are inserted as shown in Figure 3. The pins 47 are inserted through drilled holes tangentially in the tool body 34 and which intercept at the location shown in Figure 3. Through the use of these pins 47, the window can be fastened in location and held securely in place. This assures then that the plug will be retained in the housing.

The tool body 34 is drilled perpendicular to the plane of Figure 3 to define the hole portion shown at 48. · The plug is notched by two parallel grooves 49. These grooves cooperate with the holes 48 to capture the plug when the pins 47 are installed and to correctly orient the plug.

The plug is preferably constructed of beryllium. An alternative arrangement is to utilize beryllium oxide, taking into account the fact that it tends to be less transparent but more resistant to corrosion and abrasion. To protect the beryllium from corrosion, it is coated on all-exposed surfaces with a relatively thin layer of electroless nickel plating. A typical coating range of thickness is between about 0.001 to about 0.005 inches (.025 to .125mm). This coating makes a relatively tough surface and yet does not significantly reduce the transparency of the beryllium window. The outer face 40 is subjected to a substantial amount of abrasion. Added abrasion resistance can be obtained by applying a coating of titanium carbide on the exterior face 40. Rather than titanium carbide, it is also possible to use aluminum oxide as a coating material. The coatings are thin, in the range of 0.005 inches (0.125mm) thick, and do not significantly block radiation. The preferred coating thickness is a minimum of about 0.005 inches (0.125mm) to obtain relatively long life.

To this juncture, the device has been described as a ruggedized tool body with a relatively transparent port or window. The port construction including externally coated nickel and titanium carbide enhances the structure markedly. This particularly enhances the ability to resist corrosion, resist abrasion and to endure corrosive environments and abrasion typically encountered in downhole conditions.

In use, this device is successful. The construction described to this point provides a relatively opaque tool body. It is opaque to gamma rays and yet is equally rugged for the downhole environment. In like fashion, the windows in the tool body are quite transparent and able to pass low energy gamma rays. Radiation at low energy levels has significant data in it. The device can therefore be used in any circumstance and can be exposed to very high temperatures, pressures, substantial corrosion and abrasion. Moreover, even though it is ruggedized in this fashion, low lever energy radiation is readily passed by the apparatus and can be observed by detectors on the interior.

The terms high and low as used in the claims herein refer to relative ranges of atomic number. High and low thus refer to the relative opaqueness to gamma radiation of the structure intercepting a gamma photon. Moreover, the terms take into account relative concentrations; thus the window is primarily a low atomic number material and yet may have a trace of high atomic number material in the window, as for example, in a thin surface coating or in a trace alloy material. By comparison, the housing might be one inch (25mm) thick and have materials with an atomic number of 74 or more while the window might be one quarter inch (6mm) thick with an atomic number of less than 5 and has only a thin coating (0.002 inch - .05mm) of nickel. The relative opaqueness is a function of the thickness, density and atomic number.

CLAIMS:

1. A tool casing for use as or in a downhole tool suspended in a borehole, comprising:

(a) an elongate housing (10) for enclosing a tool such as a logging tool, said housing forming an enclosure and having a chamber (24) therein for equipment of said tool, and wherein said housing includes a body (34) of thickness sufficient to withstand downhole pressures and temperatures;

(b) a window (28), closing a window opening (36) of said housing, said window being formed to seal said opening to prevent leakage through said window opening; and

(c) wherein said housing is formed of a material having a high atomic number and said window is formed of a material having a low atomic number.

2. Apparatus according to claim 1, including an inside alignment shoulder (38) adjacent to said window opening to support and align said window.

3. Apparatus according to claim 1 or 2, including seal means (46) cooperatively located between said window and said housing to seal said window opening against leakage.

4. Apparatus according to claim 1,2 or 3, including lock means (47) for locking and aligning said window in said window opening.

5. Apparatus according to any of claims 1 to 4, wherein said window is made of beryllium or of a material including beryllium or beryllium oxide.

6.        Apparatus according to any of claims 1 to 5, wherein said housing is made of a material including tungsten or an alloy thereof.

7.        Apparatus according to any of claims 1 to 6, wherein said window is coated at a surface (40) thereof with an abrasion resistant and a corrosion resistant coating.

8.        Apparatus according to claim 7, wherein said coating is of electroless nickel, titanium carbide or aluminum oxide.

9.        Apparatus according to claim 7 or 8, wherein said coating is at least 0.001 inches (.025mm) thick.

10.        Apparatus according to any of claims 7 to 9, wherein said coating is applied to the exposed external face of the window.

FIG.1

FIG.2

FIG.3

DATA PROCESSOR

RECORDER

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | EP-A-0 096 975 (HALLIBURTON CO.) <br> * Page 5, line 27 - page 7, line 8; page 8, lines 25-33; figures * | 1 | G 01 V 5/04 <br> G 01 V 5/08 <br> G 01 V 5/12 |
| A | | 3,7,10 | |
| Y | US-A-3 864 569 (TITTMAN) <br> * Column 3, line 64 - column 4, line 24; figure 1 * | 1 | |
| A | | 5,6 | |
| A | US-A-2 996 619 (HERZOG) <br> * Column 2, lines 23-44; column 4, lines 18-46; figures 1,4 * | 1 | |
| | | | TECHNICAL FIELDS SEARCHED (Int. Cl.4) |
| A | US-A-3 321 625 (WAHL) <br> * Column 2, line 52 - column 3, line 50; column 4, lines 12-52; column 7, line 58 - column 8, line 2; claims 1,2; figures 1-3 * | 1 | G 01 V |

The present search report has been drawn up for all claims

| Place of search | Date of completion of the search | Examiner |
|---|---|---|
| THE HAGUE | 28-06-1985 | DATTA S. |